(19) Europäisches Patentamt
European Patent Office
Office européen des brevets

(11) EP 3 734 468 A1

(12) **EUROPEAN PATENT APPLICATION**
published in accordance with Art. 153(4) EPC

(43) Date of publication:
04.11.2020 Bulletin 2020/45

(51) Int Cl.:
*G06F 16/00* (2019.01)

(21) Application number: 18894999.4

(22) Date of filing: 04.12.2018

(86) International application number:
PCT/CN2018/119108

(87) International publication number:
WO 2019/128638 (04.07.2019 Gazette 2019/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.12.2017 CN 201711466076

(71) Applicant: Guangzhou Baiguoyuan Information
Technology Co., Ltd.
Guangzhou, Guangdong 511442 (CN)

(72) Inventors:
• LOU, Fan
Guangzhou, Guangdong 511442 (CN)
• LI, Jing
Guangzhou, Guangdong 511442 (CN)

(74) Representative: Rooney, John-Paul
Withers & Rogers LLP
4 More London Riverside
London SE1 2AU (GB)

(54) **METHOD FOR EXTRACTING BIG BEAT INFORMATION FROM MUSIC BEAT POINTS, STORAGE MEDIUM AND TERMINAL**

(57) Provided are a method for extracting big beat information from music beat points, a storage medium and a terminal, wherein same are applied to the technical field of multimedia information. The method comprises the steps of: obtaining several candidate beat cycles according to various beat points of inputted music; generating several beat point sequences of each of the candidate beat cycles and calculating the weight of each of the beat point sequences, wherein two adjacent beat points in the beat point sequence take the corresponding candidate beat cycle as an interval; selecting a beat point sequence with the maximum weight from the several beat point sequences of each of the candidate beat cycles to serve as a maximum weight sequence of each of the candidate beat cycles; and obtaining big beat information according to the maximum weight sequence of each of the candidate beat cycles and the corresponding weight. The embodiments of the present invention realize the extraction of big beat information.

FIG. 1

EP 3 734 468 A1

**Description**

**TECHNICAL FIELD**

The present disclosure relates to the field of multi-media information technologies, more particularly, relates to a method for extracting big beat information from music beat points, a storage medium and a terminal.

**BACKGROUND**

Music beat points are general terms of time points with strong rhythms, such as drum set knocking, piano accent, human voice climax and the like in music. However, big beat is a music form developed based on electronic dance music and started in Britain in the mid-1990s. Generally, for a better sense of auditory rhythm of the music, the music producer may add a set of cyclic (or quasi-cyclic) big beat points to music beat points. Taking music with drum kits participating in performance as an example, military drums in the drum kits are commonly used to play the set of beat points, and the big beat points are thereof also referred to as "military drum points". Since the big beat has a better sense of rhythm, it is of great significance in extracting big beat information from the music beat points to be applied to various scenes desired by users. However, no solution is currently available for extracting big beat information in the conventional technology.

**SUMMARY**

In view of the defects in the prior art, the present disclosure provides a method for extracting big beat information from music beat points, a storage medium and a terminal, which are used for solving the problem in the prior art that big beat information cannot be extracted from music beat points, so as to extract the big beat information from the music beat points.

According to a first aspect, embodiments of the present disclosure provide a method for extracting big beat information from music beat points. The method includes the following steps:

> acquiring a plurality of candidate beat cycles according to beat points of input music;
> generating a plurality of beat point sequences of each candidate beat cycle and calculating a weight of each beat point sequence, wherein two adjacent beat points in the beat point sequence take the corresponding candidate beat cycle as an interval;
> selecting a beat point sequence with a maximum weight from the plurality of beat point sequences of each candidate beat cycle as a maximum weight sequence of each candidate beat cycle; and
> acquiring the big beat information according to the maximum weight sequence of each candidate beat cycle and the corresponding weight.

With the method for extracting the big beat information from the music beat points according to the embodiments, a plurality of candidate beat cycles are acquired according to the input beat points, then a maximum weight sequence of each candidate beat cycle is acquired, and the big beat information may be automatically acquired according to the maximum weight sequence and the corresponding weight, thereby realizing extraction of the big beat information.

In one embodiment, acquiring the plurality of candidate beat cycles according to the beat points of the input music includes:

> recording time intervals between each two adjacent beat points in all the input beat points;
> acquiring a histogram by performing histogram statistics of Gaussian distribution on each time interval, wherein an x-coordinate of the histogram represents the time interval, and a y-coordinate represents an occurrence frequency of the time interval;
> acquiring a plurality of peak points by performing peak detection on the histogram; and
> selecting a preset number of peak points according to a descending order of times corresponding to the peak points and taking the time interval corresponding to the preset number of peak points as the candidate beat cycle.

According to the embodiment, histogram statistics are performed by Gaussian distribution, influence of the error is eliminated, and the precision of the statistical result is thereof ensured.

In one embodiment, the performing histogram statistics of Gaussian distribution on each time interval includes:

> constructing an initial histogram;
> selecting one time interval from all the time intervals as a current time interval;
> increasing a value at a position where the current time interval is located in the initial histogram by N, and increasing values at all positions where |t - T| < $\delta$ are located in the initial histogram by
>
> $$n(t) = N \times e^{-\frac{(t-T)^2}{2\sigma^2}},$$ wherein T is the current time interval, t is the time intervals other than the current time interval, and $\delta$ is a preset threshold value; and
> selecting another time interval from all the time intervals as the current time interval, and repeating the step of increasing the value at the position where the current time interval is located in the initial histogram by N and increasing the values at all position where |t - T| < $\delta$ are located in the initial histogram by n(t)
>
> $$= N \times e^{-\frac{(t-T)^2}{2\sigma^2}}$$ until all the time intervals are selected as the current time interval.

In one embodiment, the beat points include strong beat points and weak beat points; and calculating the weight of each beat point sequence includes:

selecting one beat point sequence from all the beat point sequences as a current beat point sequence;
sequentially acquiring two adjacent beat points in the current beat point sequence;
adding a first set value to the weight of the current beat point sequence if both of the two adjacent beat points in the current beat point sequence are strong beat points;
adding a second set value to the weight of the current beat point sequence if one of the two adjacent beat points in the current beat point sequence is the strong beat point and the other one is the weak beat point, wherein the second set value is less than the first set value;
adding a third set value to the weight of the current beat point sequence if the two adjacent beat points in the current beat point sequence are the weak beat points, wherein the third set value is less than the second set value;
reducing the weight of the current beat point sequence by a fourth set value if an interval between the two adjacent beat points in the current beat point sequence exceeds a corresponding candidate beat cycle;
acquiring a final weight of the current beat point sequence by multiplying the weight acquired by traversing each two adjacent beat points in the current beat point sequence by a radication of the corresponding candidate beat cycle; and
selecting another beat point sequence from all the beat point sequence as the current beat point sequence, and returning to the step of sequentially acquiring the two adjacent beat points in the current beat point sequence until all the beat point sequences are selected as the current beat point sequence.

According to the embodiment, a weight of each beat point sequence is calculated by a designed weight calculation mode, such that the common interference of 1/2, 1/3 and 2 times of big beat cycles are effectively reduced and correct big beat information is acquired.

In one embodiment, generating the plurality of beat point sequences of each candidate beat cycle includes:

selecting one candidate beat cycle from all the candidate beat cycles as a current beat cycle;
selecting one beat point from all the input beat points as an initial beat point;
searching beat points, the interval between which and the initial beat point meets an equal-cycle interval condition, from the beat points behind the initial beat point, wherein the equal-cycle interval condition is that an error between the interval and a positive integer multiple of the current beat cycle is within a set range;
forming one beat point sequence of the current beat cycle by the initial beat point and all the found beat points;
selecting another beat point from all the input beat points as the initial beat point, and returning to the step of searching the beat points, the interval between which and the initial beat point meets the equal-cycle interval condition, from the beat points behind the initial beat point until all the beat points are selected as the initial beat point; and
selecting another candidate beat cycle from all the candidate beat cycles as the current beat cycle, and returning to the step of selecting one beat point from all the input beat points as the initial beat point, until all the candidate beat cycles are selected as the current beat cycles.

In one embodiment, the big beat information includes a big beat cycle and big beat points; and acquiring the big beat information according to the maximum weight sequence of each candidate beat cycle and the corresponding weight includes:
selecting the candidate beat cycle with the maximum weight from all the candidate beat cycles, taking the selected candidate beat cycle as the big beat cycle, and taking each beat point in the maximum weight sequence of the selected candidate beat cycle as the big beat points.

In one embodiment, after taking each beat point in the maximum weight sequence of the selected candidate beat cycle as the big beat points, the method further includes:
if the interval between a beat point, in the other beat points other than the beat points serving as the big beat points in all the input beat points, and any one of the big beat points is a positive integer multiple of the big beat cycle and does not exceed two times of the big beat cycle, determining the beat point as the big beat point.

According to the embodiment, omissive big beat points are supplemented by a determination condition, such that the extraction accuracy of the big beat points is further improved.

In one embodiment, after taking each beat point in the maximum weight sequence of the selected candidate beat cycle as the big beat points, the method further includes:
if the interval between each of two beat points in the other beat points other than the beat points serving as the big beat point in all the input beat points, and any one of the big beat points is a positive integer multiple of the big beat cycle and the interval between the two beat points is the big beat cycle, determining the two beat points as the big beat point.

According to the embodiment, omissive big beat points are supplemented by a determination condition, such that the extraction accuracy of the big beat points is further improved.

According to a second aspect, embodiments of the present disclosure further provide a computer-readable storage medium having at least one computer program stored therein. When the at least one computer program, when being executed by a processor, enables the processor to perform the method for extracting the big beat information from the music beat points as described above.

With the computer-readable storage medium according to the embodiments, a plurality of candidate beat cycles are acquired according to the input beat points, then a maximum weight sequence of each candidate beat cycle is acquired, and big beat information may be automatically acquired according to the maximum weight sequence and the corresponding weight, thereby realizing extraction of big beat information.

According to a third aspect, embodiments of the present disclosure further provide a terminal. The terminal includes:

one or more processors; and
a memory configured to store one or more programs;
wherein the one or more programs, when being executed by the one or more processors, enable the one or more processors to perform the method for extracting the big beat information from the music beat points as described above.

With the terminal according to the embodiments, a plurality of candidate beat cycles are acquired according to the input beat points, then a maximum weight sequence of each candidate beat cycle is acquired, and big beat information may be automatically acquired according to the maximum weight sequence and the corresponding weight, thereby realizing extraction of the big beat information.

Additional aspects and advantages of the present disclosure are described in the following description, and become apparent from the following description or may be understood by practicing the present disclosure.

**BRIEF DESCRIPTION OF THE DRAWINGS**

The above and/or additional aspects and advantages of the present disclosure may become apparent and easily understood from the following description of the embodiments with reference to the accompanying drawings, in which:

FIG. 1 is a schematic flowchart of a method for extracting big beat information from music beat points according to an embodiment of the present disclosure;

FIG. 2 is a schematic diagram of an application scenario of the big beat information according to an embodiment of the present disclosure; and
FIG. 3 is a schematic structural diagram of a terminal according to an embodiment of the present disclosure.

**DETAILED DESCRIPTION**

Embodiments of the present disclosure are described in detail herein, examples of which are illustrated in the accompanying drawings. The reference numbers which are the same or similar throughout the accompanying drawings represent the same or similar elements or elements with the same or similar functions. The embodiments described below with reference to the accompanying drawings are illustrative for the purpose of explaining the present disclosure only and are not to be construed as limitations to the present disclosure.

It can be understood by those skilled in the art that the singular forms "a", "an", "the" and "said" are intended to include the plural forms as well, unless otherwise clearly indicated in the context. It should be further understood that the expression "include/comprise" used in the description of the present disclosure means there exists the feature, integer, step, operation, element and/or component, but could not preclude existing or adding one or more other features, integers, steps, operations, elements, components and/or groups thereof. The phrase "and/or" used herein includes all or any one unit and all combinations of one or more related listed items.

Those skilled in the art would appreciate that all terms (including technical terms and scientific terms) as used herein have the same meanings as commonly understood by those of ordinary skill in the art of the present disclosure, unless otherwise clearly indicated in the context. It also should be understood that terms such as those defined in the general dictionary should be understood to have the meanings consistent with the meanings in the context of the prior art, and may not be interpreted in an idealized or overly formal meaning unless specifically defined as herein.

It can be understood by those skilled in the art that the "terminal" and the "terminal device" as used herein include not only a device of a wireless signal receiver which has no transmitting capability, but also a device for receiving and transmitting hardware which can perform a two-way communication on a two-way communication link. The device may include: a cellular device or other communication devices with a single-line display and with or without a multi-line display; a Personal Communications Service (PCS) capable of combining voice, data processing, fax and/or data communication capabilities; a Personal Digital Assistant (PDA) that may include a radio frequency receiver, a pager, an Internet/Intranet accessor, a web browser, a notepad, a calendar and/or a Global Positioning System (GPS) receiver; and a conventional laptop and/or palmtop computer or other devices having and/or including the radio frequency receiver. The "terminal" and the "terminal device" as used herein may be portable, transportable and mounted in vehicles (aerospace, sea and/or land), or may be suitable and/or configured for local operations, and/or may run in any other locations of the earth and/or space in a distributed manner. The "terminal" and the "terminal device" as used herein may be a communication terminal, an Internet terminal and a music/video playback terminal, e.g., a PDA, a Mobile Internet Device (MID) and/or a mobile phone with a music/video playback function, and may also be such device as a smart television or a set top box.

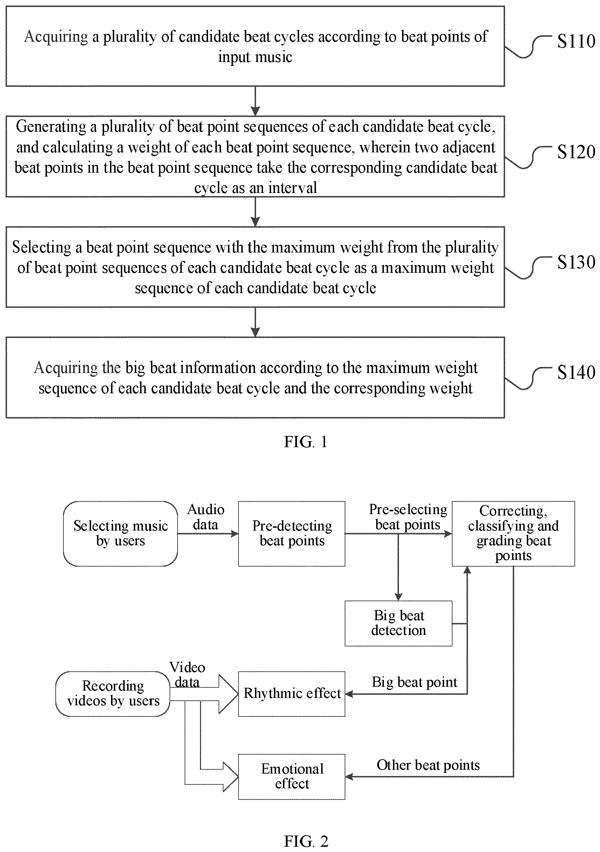

FIG. 1 is a schematic flowchart of a method for extracting big beat information from music beat points according to an embodiment. The method includes the following steps:

S110. A plurality of candidate beat cycles are acquired according to beat points of input music.

The music may be music in a music library, and may also be music uploaded by users themselves. Since the present invention intends to extract big beat information, it is necessary for the input music to have performance information with big beat. Taking a military drum as an example, the input music needs to be provided with information of snare drum performance. The music beat points are the general terms of time points with strong rhythm characteristics, such as drum set knocking, piano accent, human voice climax, and the like in music. Beat is a unit for measuring rhythm. In music, a series of beats with different strength repeatedly occur at regular intervals. If a group of events or phenomena repeatedly occurs in the same order, the time or spatial interval of completing the group of events or phenomenon is referred to as a cycle.

Firstly, it is necessary to calculate a plurality of candidate beat cycles from all the beat points for subsequent analysis, wherein acquiring each beat point (no classification at this time) from music data may be performed according to an existing method in the prior art.

S120. A plurality of beat point sequences of each candidate beat cycle are generated, and a weight of each beat point sequence is calculated, wherein two adjacent beat points in the beat point sequence take the corresponding candidate beat cycle as an interval.

For each candidate beat cycle, a plurality of beat point sequences are generated. Each beat point sequence includes various beat points, and the two adjacent beat points take the corresponding candidate beat cycle as the interval. The beat points are sequentially arranged according to the time sequence, and the two adjacent beat points refer to two beat points which are arranged in front of and behind each other. The two adjacent beat points taking the corresponding candidate beat cycle as an interval means that the interval between the two adjacent beat points is a positive integer multiple of the corresponding candidate beat cycle, and a certain error, for example, the error of ±5%, is allowed.

For example, one candidate beat cycle is T, and the candidate beat cycle T corresponds to two beat point sequences. One of the two beat point sequences includes {a beat point 1, a beat point 2 and a beat point 3}, wherein the beat point 1 and the beat point 2 are two adjacent beat points, and the interval between the two adjacent beat points is 97%T; and the beat point 2 and the beat point 3 are two adjacent beat points, and the interval between the two adjacent beat points is 102% T. The other one of the two beat point sequences includes {a beat point 4, a beat point 5 and a beat point 6}, wherein the beat point 4 and the beat point 5 are two adjacent beat points, and the interval between the two adjacent beat points is 97%2T; and the beat point 5 and the beat point 6 are two adjacent beat points, and the interval between the two adjacent beat points is 102%3T.

For each candidate beat cycle, a plurality of beat point sequences corresponding to the candidate beat cycle are acquired, and a weight of each beat point sequence is calculated. The weight of the beat point sequence refers to the relative importance of the beat point sequence in the overall evaluation.

S130. A beat point sequence with a maximum weight is selected from the plurality of beat point sequences of each candidate beat cycle as a maximum weight sequence of each candidate beat cycle.

For each candidate beat cycle, the candidate beat cycle includes various beat point sequences, wherein each beat point sequence has a weight, the selected beat point sequence with the maximum weight is the maximum weight sequence of the candidate beat cycle. By analogy, the maximum weight sequence of each candidate beat cycle may be acquired. It can be understood that when one candidate beat cycle only has a beat point sequence, the beat point sequence is the maximum weight sequence of the candidate beat cycle.

S140. Big beat information is acquired according to the maximum weight sequence of each candidate beat cycle and the corresponding weight.

Optionally, the big beat information includes a big beat cycle and a big beat point. The big beat cycle is a total length of notes of each section in a music score. In music, time is divided into equal basic units, and each unit is called a "beat" or "one beat", and a plurality of beats form a section; and real time corresponding to the section is generally fixed and called a big beat cycle. The duration of the section reflects the design on the rhythm of the music by a music score producer. The big beat points are one set of cyclic beat points which are added by a music producer in order to make music have a better sense of auditory rhythm. For music with drum kits participating in performance, military drums in the drum kits are commonly used to play the set of beat points, and the big beat points are thereof also referred to as "military drum points".

After the maximum weight sequence of each candidate beat cycle and the corresponding weight are acquired according to the above steps, the big beat information, such as the big beat cycle and big beat points corresponding to the music, may be calculated from the music beat points according to a certain calculation rule.

According to the embodiment, a plurality of candidate beat cycles are acquired according to each input beat point, and the maximum weight sequence of each candidate beat cycle is acquired, and then the big beat information may be automatically acquired according to the maximum weight sequence and the corresponding weight, thereby realizing the extraction of the big beat information.

In one embodiment, acquiring the plurality of candidate beat cycles according to the various beat points of the input music includes:

S1101. A time interval between each two adjacent beat points in all the input beat points is recorded.

The time interval between each two input beat points is recorded. Taking the input beat points including a beat point 1, a beat point 2, a beat point 3, a beat point 4, a beat point 5, ... as an example, the step tends to record the time intervals between the beat point 1 and the beat point 2, between the beat point 2 and the beat point 3, between the beat point 3 and the beat point 4, between the beat point 4 and the beat point 5, and so on. Optionally, the time interval is acquired by subtracting a time of the previous beat point from a time of the next beat point in the two adjacent beat points.

S1102. A histogram is acquired by performing histogram statistics of Gaussian distribution on each time interval, where an x-coordinate of the histogram represents the time interval, and a y-coordinate represents an occurrence frequency of the time interval.

Each time interval calculated in step S1101 is subjected to histogram statistics of Gaussian distribution. In one embodiment, performing histogram statistics of Gaussian distribution on each time interval includes:

S102a. An initial histogram is constructed.

A two-dimensional histogram table is established, wherein an x-coordinate represents all possible time intervals, a y-coordinate represents an occurrence frequency of the time intervals, and all values in the table at initial time are 0.

S1102b. One time interval is selected from all the time intervals as a current time interval.

Optionally, one time interval may be selected in order from front to back to the current time interval.

S1102c. A value at a position where the current time interval is located in the initial histogram is increased by N, and values at all positions where |t - T| < $\delta$ are located in the initial histogram are increased by

$$n(t) = N \times e^{-\frac{(t-T)^2}{2\sigma^2}}$$, wherein T respresents the

current time interval, t respresents a time interval other than the current time interval, $\delta$ respresents a preset threshold value, and e respresents a base number of a natural logarithm function.

S1102d. Another time interval is selected from all the time intervals as the current time interval, and the step of increasing the value at the position where the current time interval is located in the initial histogram by N and increasing the values at all positions where |t - T| < $\delta$ are located in the initial histogram by

$$n(t) = N \times e^{-\frac{(t-T)^2}{2\sigma^2}}$$ is repeated, until all the time intervals are selected as the current time interval.

By the histogram statistics of Gaussian distribution, influence of the error is eliminated, and the precision of the statistical result is thereof ensured.

S1103. A plurality of peak points are acquired by performing peak detection on the histogram.

The peak points are acquired by performing peak detection on the histogram according to a set peak detection condition. In one embodiment, the peak detection condition is that a minimum value of data between any two continuous peaks should be less than half of the two peaks. It should be understood that the present disclosure is not limited to detecting the peak points based on the peak detection condition, and users may also adopt other peak detection conditions.

S1104. A preset number of peak points are selected according to a descending order of times corresponding to the peak points, and the time interval corresponding to the present number of peak points is taken as the candidate beat cycle.

For all the peak points calculated in step S1103, interval times corresponding to m peaks with maximum histogram value (i.e., maximum times) are selected as a candidate beat cycle.

For each candidate beat cycle, one maximum weight equal-cycle sequence taking the cycle as the interval is extracted from all the beat points, that is the maximum weight sequence. The "equal-cycle" herein is not strictly equivalent, but allows a certain error, such as an error of ±5% and also allows a certain degree of leakage, that is, when the interval between two points in the sequence meets a positive integer multiple of the cycle, the interval is also regarded as an equal interval.

For extraction of the maximum weight sequence, it is necessary to acquire a plurality of beat point sequences of each candidate beat cycle before the maximum weight sequence is selected from the plurality of beat point sequences. In one embodiment, generating a plurality of beat point sequences of each candidate beat cycle includes:

S1201. One candidate beat cycle is selected from all the candidate beat cycles as a current beat cycle.

Any one of candidate beat cycles is selected as the current beat cycle.

S1202. One beat point is selected from all the input beat points as an initial beat point.

Any one of beat points is selected as an initial beat point of the current beat cycle. For ease of reading, optionally, each beat point may be selected in order from front to back as the initial beat point.

S1203. Beat points, the interval between which and the initial beat point meets an equal-cycle interval condition, are searched from the beat points behind the initial beat point, wherein the equal-cycle interval condition is that an error between the interval and a positive integer multiple of the current beat cycle is within a set range.

Each input beat point is sequentially arranged according to the time sequence. Beat points meeting the equal-cycle interval condition are searched from front to back by taking the initial beat point as a starting point, and if the beat points are found, the corresponding beat point is recorded. The equal-cycle interval condition is that an error between the interval and a positive integer multiple of the current beat cycle is within in a set range, that is, a certain error is allowed and meanwhile a certain degree of leakage is allowed, that is, when the interval between two points meets a positive integer multiple of the cycle, the two points are regarded as equal interval points.

During specific implementation, the first beat point meeting the equal-cycle interval condition may be searched from front to back by taking the initial beat point as a starting point, and the beat point is recorded if found. The above process is repeated by taking the previous found beat point as a new starting point until all the beat points taking the initial beat point as the starting point are acquired.

S1204. One beat point sequence of the current beat cycle is formed by the initial beat point and all the found beat points.

The initial beat point and all the found beat points form one beat point sequence of the current beat cycle.

S 1205. Another beat point is selected from all the input beat points as the initial beat point, and the step of searching the beat points, an interval between which and the initial beat point meets the equal-cycle interval condition, from the beat points behind the initial beat point is repeated until all the beat points are selected as the initial beat point to acquire all the beat point sequences of the current beat cycle.

An unprocessed beat point is selected as a new initial beat point, optionally, the next beat point of the initial beat point is selected as the new initial beat point and then step S1202 and step S1203 are repeated to acquire another beat point sequence of the current beat cycle. Then the initial beat point is updated and the above step is repeated until all the peat point sequences of the current beat cycle are acquired.

S1206. Another candidate beat cycle is selected from all the candidate beat cycles as the current beat cycle, and the step of selecting one beat point from all the input beat points as an initial beat point is repeated until all the candidate beat cycles are selected as the current beat cycle.

After all the beat point sequences of one current beat cycle are acquired, another unprocessed candidate beat cycle is selected as the new current beat cycle, and all beat point sequences of the new current beat cycle are acquired by the above steps. Then the current beat cycle is updated and the above steps is repeated until all the candidate beat cycles are selected and processed. Thus, all the beat point sequences corresponding to all the candidate beat cycles respectively are acquired.

After all the beat point sequences are acquired, it is necessary to calculate a weight of the beat point sequence, so as to compare weights of the beat point sequences acquired by taking each beat point as the starting point, the maximum weight is selected as the weight of the candidate beat cycle and the beat point sequence corresponding to the maximum weight serves as the maximum weight sequence of the candidate beat cycle.

The requirement of weight calculation intends to make real big beat cycles acquire higher weights, and make some cycle values which are easy to generate interference acquire lower weights. The conventional music beats are 2/4 beat, 3/4 beat and 4/4 beat, therefore, the solution of the present disclosure define the values which are easy to generate interference as: 1/2 big beat cycle, 1/3 big beat cycle and two times big beat cycle. The reasons for the definition are based on the following points:

1. For the music of 2/4 beat and 4/4 beat, a beat point may exist at 1/2 position of each section, thereby causing interference of 1/2 big beat cycle.

2. For the music of 3/4 beat, beat points may exist at 1/3 and 2/3 positions of each section, thereby causing interference of 1/3 big beat cycle.

3. For the music of any beats, beat points may exist at positions such as 3/8 section, 5/16 section, or the like, but generally, these beat points will not exist stably for a long time, thus the interference caused by the beat points may be ignored.

4. When music is switched between strong rhythm and weak rhythm, some big beat points may be intentionally omitted, and meanwhile, the accuracy degree of preselected beat detection is not 100% and some big beat points may be omitted, thereby causing 2 times big beat cycle interference.

In order to better distinguish real big beat and interference, according to the present disclosure, all the beat points are subjected to strength division by a beat point detection algorithm and are divided into strong beat points and weak beat points, that is, the beat points include strong beat points and weak beat points. In the circulation of beats, the beats include one strong beat and one weak beat during circulation of two units of beats, the beats include one strong beat and two weak beats during circulation of three units of beats, and when there is only one strong tone, the unit beat with the strong tone is called a strong beat and the unit beat without the strong stone is called a weak beat. Based on the following fact:

music is played generally with higher strength in order to highlight the rhythm of the music at the big beat points, therefore, the beat point detected as strong is more likely to be big beat point than the beat point detected as weak.

Based on the above reasons, in one embodiment, calculating the weight of each beat point sequence includes:

S1207. One beat point sequence is selected from all beat point sequences as a current beat point sequence.

S1208. Two adjacent beat points in the current beat point sequence are sequentially acquired.

S1209. If both of the two adjacent beat points in the current beat point sequence are strong beat points, a first set value is added to the weight of the current beat point sequence.

In one beat point sequence, the first set value is added to the weight of the beat point sequence if two continuous equal-interval beat points are strong. The first set value may be determined according to actual requirements, for example, the first set value is set as 7.

S1210. If one of the two adjacent beat points in the current beat point sequence is a strong beat point and the other one is a weak beat point, a second set value is added to the weight of the current beat point sequence, wherein the second set value is less than the first set value.

In one beat point sequence, the second set value is added to the weight of the beat point sequence if one of the two continuous equal-interval beat points is strong and the other one is weak. The second set value may be determined according to actual requirements, for example, the second set value is set as 3.

S1211. If the two adjacent beat points in the current beat point sequence are weak beat points, a third set value is added to the weight of the current beat point sequence, wherein the third set value is less than the second set value.

In one beat point sequence, if the two continuous equal-interval beat points are weak, the third set value is added to the weight of the beat point sequence. The third value may be determined according to actual requirements, for example, the third set value is set as 1.

S1212. If an interval between the two adjacent beat points in the current beat point sequence exceeds a corresponding candidate beat cycle, the weight of the current beat point sequence is reduced by a fourth set value.

In one beat point sequence, the weight is reduced if the interval between the two continuous beat points exceeds the candidate beat cycle. Optionally, the fourth set value is $2(t - 1)^2$, wherein t is the number of interval cycles. It should be understood that the fourth set value according to the present disclosure is not limited to the above determination method.

S1213. The final weight of the current beat point sequence is finally acquired by multiplying the weight acquired by traversing each two of adjacent beat points in the current beat point sequence by a radication of the corresponding candidate beat cycle.

The final weight of the beat point sequence may be acquired by multiplying the weight of the beat point sequence acquired by the above steps by a radication of the value of the candidate beat cycle.

S1214. Another beat point sequence is selected from all the beat point sequences as the current beat point sequence, and the step of sequentially acquiring the two adjacent beat points in the current beat point sequence is repeated until all the beat point sequences are selected as the current beat point sequence.

It should be understood that the present disclosure is not limited to the above weight calculation method, users may simply deform the steps and/or delete or add the steps, which is within the protection scope of the present disclosure as long as not departing from a technical concept that the beat point detected as strong is more likely to be a big beat point than a beat point detected as weak.

In order to better understand the weight calculation method, it will illustrate below with reference to an example.

It is assumed that one beat point sequence is {beat point 1, beat point 2, beat point 3 and beat point 4}, wherein the beat point 1 is a strong beat point, the beat point 2 is a strong beat point, the beat point 3 is a weak beat point and the beat point 4 is a weak beat point, the interval between the beat point 1 and the beat point 2 is 3T, and T is a candidate beat cycle corresponding to the beat point sequence, the weight of the beat point sequence is $(7+3+1-8) \cdot T^{1/2}=3\ T^{1/2}$.

In one embodiment, acquiring the big beat information according to the maximum weight sequence of each candidate beat cycle and the corresponding weight includes: S1401. The candidate beat cycle with the maximum weight is selected from all the candidate beat cycles, the selected candidate beat cycle serves as a big beat cycle, and each beat point in the maximum weight sequence of the selected candidate beat cycle serves as a big beat point. The candidate beat cycle with the maximum weight in all the candidate beat cycles is output as a big beat cycle, and each beat point in the maximum weight sequence corresponding to the big beat cycle is the big beat point.

It should be understood that the present disclosure is not limited to the above method for determining the big beat information. Within the allowable range of error, the candidate beat cycle with the second largest weight from all the candidate beat cycles may be selected to serve as a big beat cycle, and each beat point in the maximum weight sequence of the selected candidate beat cycle serves as the big beat point.

Due to the introduction of the weight, when the interval between two continuous beat points exceeds 1 cycle, the weight will be reduced. Therefore, some beat points and the selected big beat points may satisfy the equal-beat interval, but the beat points do not belong the maximum weight sequence corresponding to the big beat cycle. The beat points should also be determined as the big beat points when a certain condition is met, therefore, it is necessary to perform supplement operation on the maximum weight sequence corresponding to the big beat cycle, that is, supplement the omissive big beat points.

In one embodiment, after taking each beat points in the maximum weight sequence of the selected candidate beat cycle as the big beat point, the method further includes: S1402. If the interval between a beat point, in the other beat points other than the beat points serving as the big beat points in all the input beat points, and any one of the big beat points is a positive integer multiple of the big beat cycle and does not exceed two times of big beat cycle, the beat point is determined as the big beat point.

In the embodiment, if the interval between a certain non-big beat point and any one of the big beats is a positive integer multiple of the big beat cycle and does not exceed two times of the big beat cycle, the non-big beat point is determined as the big beat point. Any one of the big beat points refers to a big beat point randomly selected from the maximum weight sequence corresponding to the big beat cycle. The interval is a positive integer multiple of the big beat cycle, and a certain error range is also allowed, that is, the interval only needs to be around the integer multiple of the big beat cycle.

In another embodiment, after taking each beat point in the maximum weight sequence of the selected candidate beat cycle as the big beat points, the method further includes:

S1403. If the interval between each of two beat points, in the other beat points except for the beat points serving as the big beat points in all the input beat points, and any one of the big beat points is a positive integer multiple of the big beat cycle and the interval between the two beat points is the big beat cycle, the two beat points are determined as big beat points.

When intervals between each of two non-big beat points and any one of the big beat points are a positive integer multiple of the big beat cycle, and the interval between the two non-big beat points is one big beat cycle, the two non-big beat points are determined as big beat points.

The acquired big beat information may be applied to various scenes. It will introduce below with reference to two examples. It should be understood that the big beat information acquired according to the present disclosure is not limited to be applied to the following two scenes, and users also may apply the big beat information to other scenes according to requirements.

For example, preset rhythmic effect is added onto the big beat point indicated by the big beat information. The rhythmic effect refers to the effect related to rhythm, for example, lighting effect, explosion effect, or the like. The big beat information may be directly sent to a video effect module, and the whole video effect is matched with the music rhythm by adding specific rhythmic effect on the big beat points when users record videos.

For another example, the detection result of the beat points of the music is corrected according to the big beat information and the residual beat points are classified and graded, and then preset emotional effect is added onto the residual beat points. The emotional effect refers to effect related to emotion, for example, effect expressing happiness, effect expressing free from worry, or the like. The calculated big beat information may be sent back to a beat detection program to assist the beat detection program in correcting the detection result of the beat points, so as to improve the accuracy degree, wherein the method for correcting the detection result of the beat points according to the big beat cycle in the big beat information may be implemented by an existing method in the prior art. The residual beat points may also be classified and graded according to the big beat information, for example, the beat points other than the big beat points are classified into one category, and the strength grade of this category is less than the strength grade of the big beat point, such that the beat points with different categories and different strengths are applied to different scenes. In addition, the information of the residual beat points may also be directly sent to the video effect module, and the accuracy degree of the video effect and the coordination degree with the music may be improved by adding specific emotional effect on the residual beat points when users record videos.

FIG. 2 is a schematic diagram of an application scenario of big beat information according to an embodiment. When the users select music in the music library or upload one piece of music by themselves, a product application program may calculate one group of preselected beat point information according to audio data of the music and then invoke the scheme of the present disclosure to calculate big beat information corresponding to the music from the preselected beat points, namely the big beat cycle and the big beat point.

The calculated big beat information may be sent back to the beat detection program to assist the beat detection program in correcting the beat detection result to improve the accuracy degree, the residual beat points may be classified and graded, then the residual beat points may be directly sent to the video effect module, and the accuracy degree of the video effect and the coordination degree with the music may be further improved by adding the specific emotional effect onto the residual beat points when the users records the videos.

Further, the calculated big beat information may be directly sent to the video effect module. When the users record the videos, the output effect of the finally video are better matched with the music by adding the specific rhythmic effect onto the big beat points, thereby achieving better viewing experience.

An embodiment of the invention further provides a computer-readable storage medium, in which at least one computer program is stored. The at least one computer program, when being executed by a processor, enables the processor to perform the method for extracting big beat information from music beat points as described above. The storage medium includes, but not limited to any types of disks (including a soft disk, a hard disk, an optical disk, a CD-ROM and a magneto-optical disk), an read-only memory (ROM), an random access memory (RAM), an erasable programmable read-only memory (EPROM), an electrically erasable programmable read-only memory (EEPROM), a flash memory, a magnetic card or a light card. That is, the storage medium includes any mediums for storing or transmitting information by a device (such as a computer) in a readable form, and may be a read-only memory, a disk or an optical disk, or the like.

An embodiment of the present disclosure further provides a terminal. The terminal includes:

> one or more processors; and
> a memory configured to store one or more programs; wherein the one or more programs, when being executed by the one or more processors, enable the one or more processors perform the method for extracting big beat information from music beat points as described above.

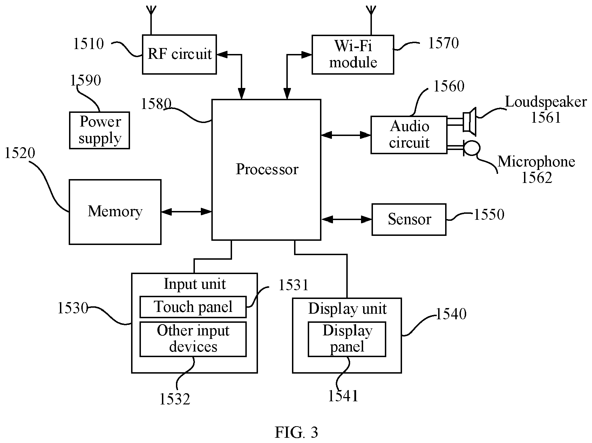

As shown in FIG. 3, for the convenience of description, only the parts related to the embodiments of the present disclosure are shown. For the specific technical details not disclosed, reference may be made to the method embodiments of the present disclosure. The terminal may be any terminal device including a mobile phone, a tablet computer, a PDA, a point of sales (POS) machine, an onboard computer. The terminal being a mobile phone is taken as an example.

FIG. 3 is a block diagram showing a partial structure of a mobile phone related to the terminal provided by an embodiment of the present disclosure. Referring to FIG. 2, the mobile phone includes: a radio frequency (RF) circuit 1510, a memory 1520, an input unit 1530, a display unit 1540, a sensor 1550, an audio circuit 1560, a wireless fidelity (Wi-Fi) module 1570, a processor 1580, a power supply 1590 and other components. It may be understood by those skilled in the art that the structure of the mobile phone shown in FIG. 2 does not constitute a limitation to the mobile phone, and may include more or less components than those illustrated, or a combination of some components, or different component arrangements.

The following describes the respective components of the mobile phone in detail with reference to FIG. 3.

The RF circuit 1510 may be configured to receive and transmitting during the reception or transmission of information or during a call. Specifically, the RF circuit 1510 receives downlink information from a base station for the processing of the processor 1580, and additionally sends data designed for the uplink to the base station. Generally, the RF circuit 1510 includes, but is not limited to, an antenna, at least one amplifier, a transceiver, a coupler, a low noise amplifier (LNA), a duplexer, and the like. In addition, the RF circuitry 1510 may also communicate with the network and other devices via wireless communication. The above wireless communication may use any communication standard or protocol, including but not limited to global system of mobile communication (GSM), general packet radio service (GPRS), code division multiple access (CDMA), wideband code division multiple access (WCDMA), long term evolution (LTE), e-mail, short messaging service (SMS), and the like.

The memory 1520 may be configured to store software programs and modules. The processor 1580 runs various functional applications and data processing of the mobile phone by running the software programs and modules stored in the memory 1520. The memory 1520 may mainly include a program storage area and a data storage area. The program storage area may store an operating system, an application required for at least one function (such as a big beat information extraction function, or the like), and the like. The data storage area may store data (such as big beat information, or the like) created according to the usage of the mobile phone. Moreover, the memory 1520 may include a high-speed random-access memory, and may also include a non-volatile memory, such as at least one magnetic disk memory, flash memory device, or other volatile solid-state memory.

The input unit 1530 may be configured to receive input numeric or character information and to generate key signal inputs related to user settings and function controls of the mobile phone. Specifically, the input unit 1530 may include a touch panel 1531 and other input device 1532. The touch panel 1531, also referred to as a touch screen, may collect touch operations of the user on or near the touch panel (for example, the user uses any proper article or accessory such as a finger, a stylus, or the like to operate on the touch panel 1531 or near the touch panel 1531), and drive a corresponding connecting device according to a preset program. Optionally, the touch panel 1531 may include two parts: a touch detection device and a touch controller. The touch detection device detects the touch orientation of the user, detects a signal generated by the touch operation, and transmits the signal to the touch controller. The touch controller receives the touch information from the touch detection device, converts the touch information into contact coordinates, and sends same to the processor 1580. The touch controller may further receive commands from the processor 1580 and execute them. In addition, the touch panel 1531 may be implemented in various types such as resistive type, capacitive type, infrared ray, and surface acoustic waves. In addition to the touch panel 1531, the input unit 1530 may also include other input device 1532. Specifically, other input device 1532 may include, but are not limited to, one or more of a physical keyboard or keypad, a function key (such as a volume control button, a switch button, etc.), a trackball, a mouse, a joystick, and the like.

The display unit 1540 may be configured to display information input by the user or information provided to the user as well as various menus of the mobile phone. The display unit 1540 may include a display panel 1541. Alternatively, the display panel 1541 may be configured in the form of a liquid crystal display (LCD), an organic light-emitting diode (OLED), or the like. Further, the touch panel 1531 may cover the display panel 1541. After the touch panel 1531 detects a touch operation on or near the touch panel, the touch panel 1531 transmits same to the processor 1580 to determine the type of the touch event. Then the processor 1580, according to the type of the touch event, provides a corresponding visual output on the display panel 1541. Although in FIG. 2, the touch panel 1531 and the display panel 1541 are used as two independent components to implement the input and input functions of the mobile phone, in some embodiments, the touch panel 1531 and the display panel 1541 may be integrated to realize the input and output functions of the mobile phone.

The mobile phone may also include at least one type of sensor 1550, such as a light sensor, a motion sensor, and other sensors. Specifically, the light sensor may include an ambient light sensor and a proximity sensor. The ambient light sensor may adjust the brightness of the display panel 1541 according to the brightness of the ambient light. The proximity sensor may close the display panel 1541 and/or the backlight when the mobile phone moves to the ear. As a kind of motion sensor, an accelerometer sensor may detect the acceleration of each direction (usually three axes), may detect the magnitude and direction of gravity at rest, which may be used for an application that identifies the gesture of the mobile phone (such as horizontal and vertical screen switching, related game, magnetometer attitude calibration) and vibration recognition related functions (such as pedometer, tapping), or the like. Other sensors such as gyroscopes, barometers, hygrometers, thermometers, infrared sensors, or the like that may be equipped on mobile phones is not described herein.

An audio circuit 1560, a speaker 1561, and a microphone 1562 may provide an audio interface between the user and the mobile phone. The audio circuit 1560 may transmit the converted electrical data of the received audio data to the speaker 1561, and the speaker 1561 converts it into a voiceprint signal output. On the other hand, the microphone 1562 converts the captured voiceprint signal into an electrical signal, the electrical signal is received by the audio circuit 1560 and converted to audio data, and the audio data is output to the processor 1580 for processing and is further transmitted to the other mobile device via the RF circuit 1510, or the audio data is output to the memory 1520 for further processing.

Wi-Fi is a short-range wireless transmission technology. The mobile phone may help users to send and receive e-mail, browse web pages and access streaming media through Wi-Fi module 1570. The Wi-Fi module 1570 provides users with wireless broadband Internet access. Although FIG. 2 shows the Wi-Fi module 1570, it may be understood that the Wi-Fi module does not belong to the essential configuration of the mobile phone, and may be omitted as needed within the scope of not changing the essence of the present disclosure.

The processor 1580 is the control center for the mobile phone that connects various portions of the entire mobile phone using various interfaces and lines. The processor 1580 executes various functions and processing data of the mobile phone by running or executing the software programs and/or modules stored in the memory 1520 and invoking data stored in the memory 1520, so as to realize overall monitoring of the mobile phone. Optionally, the processor 1580 may include one or more processing units. Preferably, the processor 1580 may integrate an application processor and a modem processor. The application processor mainly processes an operating system, a user interface, an application, and the like. The modem processor primarily handles wireless communications. It would be appreciated that the above described modem processor may also not be integrated into the processor 1580.

The mobile phone also includes a power supply 1590 (such as a battery) that supplies power to the various components. Preferably, the power supply may be logically connected to the processor 1580 via a power management system, thereby enabling management of charging, discharging, and power consumption via the power management system.

Although not shown, the mobile phone may further include a camera, a Bluetooth module, and the like, and details are not described herein again.

Compared with the prior art, the method for extracting the big beat information from music beat points, the storage medium and the terminal have the following advantages:

1. A plurality of candidate beat cycles are acquired according to various input beat points, the maximum weight sequence of each candidate beat cycle is acquired, and the big beat information may be automatically acquired according to the maximum weight sequence and the corresponding weight, thereby realizing extraction of the big beat information.

2. Further, the music beat points are subjected to primary classification, the big beat points which best represent the rhythm of the music are separately extracted, and the output effect of the final video are better matched with the rhythm of the music by adding specific rhythmic effect on the big beat points, such that better viewing experience is achieved; and moreover, the residual beat points may be better corrected, analyzed and classified with reference to the big beat information, and emotional effect is added on the residual beat points, such that the accuracy degree of the added video effect and the coordination degree with the music is further improved.

3. In addition, histogram statistics is performed by Gaussian distribution, and the precision of the statistic result is guaranteed while influence of the error is eliminated, such that more accurate big beat information is acheived.

4. Furthermore, the weight of each beat point sequence is calculated by the designed weight calculation method, such that the interference of the common 1/2, 1/3 and 2 times big beat cycles is effectively reduced and correct big beat information is acquired.

5. Furthermore, the omissive big beat points are supplemented by a determination condition, such that the extraction accuracy of the big beat points is further improved.

It should be understood that although the various steps in the flowchart of the drawings are sequentially displayed as indicated by the arrows, these steps are not necessarily performed in the order indicated by the arrows. Except as explicitly stated herein, the execution of these steps is not strictly limited, and may be performed in other sequences. Moreover, at least some of the steps in the flowchart of the drawings may include a plurality of sub-steps or a plurality of stages, which are not necessarily performed at the same time, but may be executed at different time. The execution order thereof is also not necessarily performed sequentially, but may be performed alternately with at least a portion of other steps or sub-steps or stages of other steps. Described above are some embodiments of the present disclosure, and it should be noted that those of ordinary skill in the art may also make several improvements and modifications without departing from the principles of the present disclosure which should be considered as the scope of protection of the present disclosure.

**Claims**

1. A method for extracting big beat information from music beat points, comprising the following steps:

   acquiring a plurality of candidate beat cycles according to beat points of input music;
   generating a plurality of beat point sequences of each candidate beat cycle and calculating a weight of each beat point sequence, wherein two adjacent beat points in the beat point sequence take the corresponding candidate beat cycle as an interval;
   selecting a beat point sequence with a maximum weight from the plurality of beat point sequences of each candidate beat cycle as a maximum weight sequence of each candidate beat cycle; and
   acquiring the big beat information according to the maximum weight sequence of each candidate beat cycle and the corresponding weight.

2. The method according to claim 1, wherein acquiring the plurality of candidate beat cycles according to the beat points of the input music comprises:

   recording time intervals between each two adjacent beat points in all the input beat points;
   acquiring a histogram by performing histogram statistics of Gaussian distribution on each time interval, wherein an x-coordinate of the histogram represents the time interval, and a y-coordinate represents an occurrence frequency of the time interval;
   acquiring a plurality of peak points by performing peak detection on the histogram; and
   selecting a preset number of peak points according to a descending order of times corresponding to the peak points and taking the time interval corresponding to the preset number of peak points as the candidate beat cycle.

3. The method according to claim 2, wherein performing the histogram statistics of Gaussian distribution on each time interval comprises:

   constructing an initial histogram;
   selecting one time interval from all the time intervals as a current time interval;
   increasing a value at a position where the current time interval is located in the initial histogram by N, and increasing values at all positions where $|t - T| < \delta$ are located in the initial histogram by $n(t) = N \times e^{-\frac{(t-T)^2}{2\sigma^2}}$, wherein T is the current time interval, t is the time interval other than the current time interval, and $\delta$ is a preset threshold value; and
   selecting another time interval from all the time intervals as the current time interval, and repeating the step of increasing the value at the position where the current time interval is located in the initial histogram by N and increasing the values at all positions where $|t - T| < \delta$ are located in the initial histogram by $n(t) = N \times e^{-\frac{(t-T)^2}{2\sigma^2}}$ until all the time intervals are selected as the current time interval.

4. The method according to claim 1, wherein the beat points comprise strong beat points and weak beat points; and

calculating the weight of each beat point sequence comprises:

selecting one beat point sequence from all the beat point sequences as a current beat point sequence;

sequentially acquiring two adjacent beat points in the current beat point sequence;

adding a first set value to the weight of the current beat point sequence if both of the two adjacent beat points in the current beat point sequence are strong beat points;

adding a second set value to the weight of the current beat point sequence if one of the two adjacent beat points in the current beat point sequence is the strong beat point and the other one is the weak beat point, wherein the second set value is less than the first set value;

adding a third set value to the weight of the current beat point sequence if the two adjacent beat points in the current beat point sequence are the weak beat points, wherein the third set value is less than the second set value;

reducing the weight of the current beat point sequence by a fourth set value if an interval between the two adjacent beat points in the current beat point sequence exceeds a corresponding candidate beat cycle;

acquiring a final weight of the current beat point sequence by multiplying the weight acquired by traversing each two adjacent beat points in the current beat point sequence by a radication of the corresponding candidate beat cycle; and

selecting another beat point sequence from all the beat point sequences as the current beat point sequence, and repeating the step of sequentially acquiring the two adjacent beat points in the current beat point sequence until all the beat point sequences are selected as the current beat point sequence.

5. The method according to any one of claims 1 to 4, wherein generating the plurality of beat point sequences of each candidate beat cycle comprises:

selecting one candidate beat cycle from all the candidate beat cycles as a current beat cycle;

selecting one beat point from all the input beat points as an initial beat point;

searching beat points, the interval between which and the initial beat point meets an equal-cycle interval condition, from the beat points behind the initial beat point, wherein the equal-cycle interval condition is that an error between the interval and a positive integer multiple of the current beat cycle is within a set range;

forming one beat point sequence of the current beat cycle by the initial beat point and all the found beat points;

selecting another beat point from all the input beat points as the initial beat point, and returning to the step of searching the beat points, the interval between which and the initial beat point meets the equal-cycle interval condition, from the beat points behind the initial beat point until all the beat points are selected as the initial beat point; and

selecting another candidate beat cycle from all the candidate beat cycles as the current beat cycle, and returning to the step of selecting one beat point from all the input beat points as the initial beat point, until all the candidate beat cycles are selected as the current beat cycle.

6. The method according to any one of claims 1 to 4, wherein the big beat information comprises a big beat cycle and big beat points; and

acquiring the big beat information according to the maximum weight sequence of each candidate beat cycle and the corresponding weight comprises:
selecting the candidate beat cycle with the maximum weight from all the candidate beat cycles, taking the selected candidate beat cycle as the big beat cycle, and taking each beat points in the maximum weight sequence of the selected candidate beat cycle as the big beat points.

7. The method according to claim 6, wherein after taking each beat points in the maximum weight sequence of the selected candidate beat cycle as the big beat points, the method further comprises:
if the interval between a beat point in the other beat points other than the beat points serving as the big beat points in all the input beat points, and any one of the big beat points is a positive integer multiple of the big beat cycle and does not exceed two times of the big beat cycle, determining the beat point as the big beat point.

8. The method according to claim 6, wherein after taking each beat points in the maximum weight sequence of the selected candidate beat cycle as the big beat points, the method further comprises:
if the interval between each of two beat points in the other beat points other than the beat points serving as the big beat points in all the input beat points, and any one of the big beat points is a positive integer multiple of the big beat cycle and the interval between the two beat points is the big beat cycle, determining the two beat points as the big beat point.

9. A computer-readable storage medium having a computer program stored therein, wherein the method for extracting the big beat information from the music beat points as defined in any one of claims 1 to 8 is implemented when the program is executed by a processor.

**10.** A terminal, comprising:

one or more processors;
a memory configured to store one or more programs;
wherein the one or more programs, when being executed by the one or more processors, enable the one or more processors to perform the method for extracting the big beat information from the music beat points as defined in any one of claims 1 to 8.

Acquiring a plurality of candidate beat cycles according to beat points of input music — S110

Generating a plurality of beat point sequences of each candidate beat cycle, and calculating a weight of each beat point sequence, wherein two adjacent beat points in the beat point sequence take the corresponding candidate beat cycle as an interval — S120

Selecting a beat point sequence with the maximum weight from the plurality of beat point sequences of each candidate beat cycle as a maximum weight sequence of each candidate beat cycle — S130

Acquiring the big beat information according to the maximum weight sequence of each candidate beat cycle and the corresponding weight — S140

FIG. 1

Selecting music by users → Audio data → Pre-detecting beat points → Pre-selecting beat points → Correcting, classifying and grading beat points

Big beat detection

Recording videos by users → Video data → Rhythmic effect ← Big beat point

Emotional effect ← Other beat points

FIG. 2

1510 — RF circuit

1570 — Wi-Fi module

1590 — Power supply

1580 — Processor

1560 — Audio circuit

Loudspeaker 1561

Microphone 1562

1520 — Memory

1550 — Sensor

Input unit
1531
Touch panel
1530 — Other input devices
1532

1540 — Display unit
Display panel
1541

FIG. 3

## INTERNATIONAL SEARCH REPORT

| International application No. |
| --- |
| **PCT/CN2018/119108** |

**A. CLASSIFICATION OF SUBJECT MATTER**

G06F 16/00(2019.01)i

According to International Patent Classification (IPC) or to both national classification and IPC

**B. FIELDS SEARCHED**

Minimum documentation searched (classification system followed by classification symbols)

G06F16/-

Documentation searched other than minimum documentation to the extent that such documents are included in the fields searched

Electronic data base consulted during the international search (name of data base and, where practicable, search terms used)

CNABS; CNTXT; CNKI; TWABS; DWPI; VEN; USTXT; WOTXT; EPTXT: 音乐, 提取, 检测, 大节拍, 军鼓, 周期, 权重, 权值, music, extraction, detection, big beat, snare drum, period, weight

**C. DOCUMENTS CONSIDERED TO BE RELEVANT**

| Category* | Citation of document, with indication, where appropriate, of the relevant passages | Relevant to claim No. |
| --- | --- | --- |
| PX | CN 108108457 A (GUANGZHOU BAIGUOYUAN INFORMATION TECHNOLOGY CO., LTD.) 01 June 2018 (2018-06-01) entire document | 1-10 |
| A | CN 104217729 A (TRUEPOSITION, INC.) 17 December 2014 (2014-12-17) entire document | 1-10 |
| A | CN 107229629 A (TENCENT TECHNOLOGY SHENZHEN CO., LTD.) 03 October 2017 (2017-10-03) entire document | 1-10 |
| A | KR 20170106165 A (SAMSUNG ELECTRONICS CO., LTD.) 20 September 2017 (2017-09-20) entire document | 1-10 |

☐ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 February 2019** | **04 March 2019** |

| Name and mailing address of the ISA/CN | Authorized officer |
| --- | --- |
| **State Intellectual Property Office of the P. R. China No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/119108**

| Patent document cited in search report | | | Publication date (day/month/year) | Patent family member(s) | | | Publication date (day/month/year) |
|---|---|---|---|---|---|---|---|
| CN | 108108457 | A | 01 June 2018 | None | | | |
| CN | 104217729 | A | 17 December 2014 | US | 2014358265 | A1 | 04 December 2014 |
| | | | | US | 9830896 | B2 | 28 November 2017 |
| CN | 107229629 | A | 03 October 2017 | WO | 2017162187 | A1 | 28 September 2017 |
| | | | | US | 2018276297 | A1 | 27 September 2018 |
| KR | 20170106165 | A | 20 September 2017 | KR | 20170141164 | A | 22 December 2017 |
| | | | | WO | 2017155200 | A1 | 14 September 2017 |

Form PCT/ISA/210 (patent family annex) (January 2015)